# EUROPÄISCHE PATENTSCHRIFT

(11) **EP 1 796 944 B1**
(45) Veröffentlichungstag und Bekanntmachung des Hinweises auf die Patenterteilung: **29.10.2008**
(21) Anmeldenummer: 05802350.8
(22) Anmeldetag: 01.10.2005
(51) Int. Cl.: B60R 22/46

(54) **ENDBESCHLAGSTRAFFER MIT MONTAGESICHERUNG FÜR DAS GURTBAND**
END-FITTING TENSIONER WITH A MOUNTING SECURING FOR THE BELT STRAP
TENDEUR A GARNITURE TERMINALE POURVU D'UN SYSTEME DE SECURITE AU MONTAGE POUR LA SANGLE

(30) Priorität: 07.10.2004 DE 102004049142
(43) Veröffentlichungstag der Anmeldung: 20.06.2007
(73) Patentinhaber: AUTOLIV DEVELOPMENT AB, 447 83 Vargarda (SE)
(72) Erfinder: SINGER, Klaus-Peter, 22399 Hamburg (DE); JABUSCH, Ronald, 25226 Elmshorn (DE)
(74) Vertreter: Müller, Karl-Ernst
(86) Internationale Anmeldenummer: PCT/EP2005/010619
(87) Internationale Veröffentlichungsnummer: WO 2006/040027

(56) Entgegenhaltungen:
- EP-A- 0 962 365
- EP-A- 1 270 346
- DE-B3- 10 313 551

## Beschreibung

Die Erfindung betrifft einen Endbeschlagstraffer für ein Sicherheitsgurtsystem in Kraftfahrzeugen mit einer in seitlichen Gehäuseschenkeln eines U-förmigen Gehäuses gelagerten Gurtwelle, wobei das Ende des Gurtbandes mittels eines in eine Ausnehmung der Gurtwelle eingelegten Gurtstiftes an der Gurtwelle festgelegt ist, wobei die Gurtwelle an einer Stirnseite eine Öffnung als Zugang zur Ausnehmung sowie einen radialen, von der Ausnehmung bis zum Außenumfang der Gurtwelle reichenden Wellenschlitz zum seitlichen Einschieben des Gurtbandendes mit Gurtstift und weiterhin ein Gehäuseschenkel einen in die Lageröffnung für die Gurtwelle reichenden Durchführungsschlitz für das einzuschiebende Gurtband aufweisen.

Ein derartiger Endbeschlagstraffer ist in der DE 103 13 551 B3 beschrieben. Bei einem derartigen Endbeschlagstraffer ergibt sich das Problem, dass im Anschluss an die Montage des Gurtstiftes mit dem daran gehalterten Ende des Gurtbandes in der Welle des am Fahrzeug bereits vormontierten Endbeschlagstraffers ein Herausrutschen des Gurtstiftes mit Gurtband aus dem Endbeschlagstraffer möglich ist beziehungsweise dass die Möglichkeit einer Abfrage der Fertigmontage des Gurtstiftes mit Gurtband an dem Endbeschlagstraffer seitens der Automobilhersteller gefordert wird.

Der Erfindung liegt daher die Aufgabe zugrunde, einen Endbeschlagstraffer mit den gattungsgemäßen Merkmalen so weiterzubilden, dass der in der Gurtwelle des Endbeschlagstraffers montierte Gurtstift mit daran gehaltertem Gurtband gegen ein nachfolgendes Herausrutschen gesichert ist.

Die Lösung dieser Aufgabe ergibt einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Gurtstift an dem seiner Einschubseite gegenüberliegenden äußeren Ende in einem bei in die Gurtwelle eingeschobenem Gurtstift an dem Gehäuse festlegbaren Halter fixiert ist, und dass der Gurtstift bei Auslösung des Strafferantriebs und Drehung der Gurtwelle gegenüber dem Halter frei drehbar eingerichtet ist. Mit der Erfindung ist der Vorteil verbunden, dass bei vollständig und vor allem in der richtigen Endposition montiertem Gurtstift das an dem mit dem Gurtstift verbundenen Halter anzubringende Befestigungsmittel automatisch in eine Position relativ zum Gehäuse des Endbeschlagstraffers gelangt, in welcher das Befestigungsmittel so vor einer zugeordneten, an dem Gehäuse ausgebildeten Aufnahme liegt, dass das Befestigungsmittel in Eingriff mit dem Gehäuse zu bringen ist, so dass anschließend der Gurtstift gegen ein ungewolltes Herausrutschen gesichert ist. Soweit während der Montage eine Verbindung zwischen dem Gurtstift und dem Gehäuse des Endbeschlagstraffers über den Halter hergestellt ist, ist erfindungsgemäß dafür Sorge getragen, dass im Falle der Auslösung des Strafferantriebes und der dadurch bewirkten Drehung der Gurtwelle eine vorherige freie Drehbarkeit des Gurtstiftes gegenüber dem Halter eingerichtet oder aber eine Trennung der Fixierung des Gurtstiftes von dem Halter vollzogen wird.

Soweit der für die Montage des Gurtstiftes einschließlich des daran festgelegten Gurtbandendes notwendige Durchführungsschlitz in einem der Gehäuseschenkel des Gehäuses eine gewisse Schwachstelle bei einer entsprechend starken Belastung des Gurtaufrollers im Blockierfall darstellen kann, ist vorgesehen, dass der Halter an dem mit dem Durchführungsschlitz versehenen Gehäuseschenkel des Gehäuses derart festgelegt ist, dass der am Gehäuse befestigte Halter die durch den Durchführungsschlitz getrennten Bereiche des Gehäuseschenkels gegeneinander festlegt. Damit sorgt der Halter in vorteilhafter Weise dafür, dass sich der geschlitzte Gehäuseschenkel auch unter Last nicht öffnen kann, so dass damit die Sicherheit des Endbeschlagstraffers zusätzlich verbessert ist. Der Halter kann dabei der Halterung des Gurtstiftes dienen oder aber auch als zusätzliches Bauteil ohne eine Verbindung zum Gurtstift, lediglich zur Sicherung des Gehäuses, ausgebildet sein.

Hinsichtlich der konstruktiven Ausführung des Halters ist nach einem ersten Ausführungsbeispiel der Erfindung vorgesehen, dass der Halter aus einem Z-förmigen Sicherungsblech besteht, dessen einer Z-Schenkel den mit dem Durchführungsschlitz versehenen Gehäuseschenkel des Gehäuses übergreift und in dessen anderem Z-Schenkel eine Befestigungsöffnung zur Aufnahme des den Z-Schenkel mit dem Gehäuse verbindenden Befestigungsmittels angeordnet ist, wobei in dem Mittelschenkel des Sicherungsbleches eine Aufnahmeöffnung zur Fixierung des Gurtstiftes angeordnet ist.

Hierbei kann zur gegenseitigen Festlegung der Teile des geschlitzten Gehäuseschenkels vorgesehen sein, dass der den Gehäuseschenkel übergreifende Z-Schenkel des Sicherungsbleches in dessen Befestigungslage jeweils formschlüssig mit den durch den Durchführungsschlitz getrennten Bereichen des Gehäuseschenkels verbunden ist, beispielsweise dadurch, dass in dem den Gehäuseschenkel übergreifenden Z-Schenkel des Befestigungsbleches zwei Durchbrüche ausgebildet sind, die jeweils einen von den durch den Durchführungsschlitz getrennten Bereichen des Gehäuseschenkels abragenden Zapfen übergreifen.

Zu einer weiteren Sicherung dieser Funktion des Halters beziehungsweise Sicherungsbleches kann weiterhin vorgesehen sein, dass der den Gehäuseschenkel übergreifende Z-Schenkel des Sicherungsbleches mit einem abgekröpften Ende den Gehäuseschenkel formschlüssig übergreift und dadurch axial gegen das Gehäuse festgelegt ist.

Hinsichtlich der Fixierung des Gurtstiftes in dem Sicherungsblech sowohl während der Montage als auch während der Funktion des Endbeschlagstraffers ist nach einem Ausführungsbeispiel der Erfindung vorgesehen, dass die in dem Mittelschenkel des Sicherungsbleches ausgebildete Aufnahmeöffnung schlüssellochartig mit einem das Ende des darin eingelegten Gurtstiftes frei drehbar haltenden Bereich und mit einem den Gurtstift undrehbar fixierenden Bereich ausgebildet ist, wobei der Gurtstift in der Montagestellung des Sicherungsbleches in dem Fixierbereich der Aufnahmeöffnung liegt und während der Montage durch Relativverschiebung des Sicherungsbleches gegenüber dem den Gurtstift einseitig lagernden Gehäuse in den Drehbereich der Aufnahmeöffnung wandert.

Zur axialen Fixierung des Gurtstiftes in dem Sicherungsblech ist nach einem Ausführungsbeispiel der Erfindung vorgesehen, dass der Gurtstift an seinem in dem Sicherungsblech fixierten Ende eine Nut zum Eingriff des Randes der Aufnahmeöffnung aufweist.

Soweit es aus der gattungsbildenden Druckschrift an sich bereits bekannt ist, das Herausrutschen des Gurtbandes aus dem Durchführungsschlitz des Gehäuses durch die Anordnung eines in der Sicherungslage den Durchführungsschlitz übergreifenden Sicherungsbügel zu sperren, ist nach einem alternativen Ausführungsbeispiel der Erfindung vorgesehen, dass der Sicherungsbügel Bestandteil des Gurtstiftes und an diesem vormontiert ist.

Bezüglich der lösbaren Fixierung zwischen dem Gurtstift und dem Halter ist nach einem Ausführungsbeispiel der Erfindung vorgesehen, dass der Gurtstift über Sollbruchstellen mit dem Halter verbunden ist, wobei in einer konstruktiven Ausführung vorgesehen sein kann, dass der Gurtstift mit einem Ansatz in eine in dem Halter ausgebildete Öffnung ragt und über sternförmig über seinen Umfang verteilt angeordnete radiale Sollbruchrippen mit dem den Ansatz des Gurtstiftes mit Abstand umgrenzenden Rand der Öffnung des Halters verbunden ist.

Bezüglich der Befestigung des Halters an dem Gehäuse ist in einer ersten Ausführungsform vorgesehen, dass das Befestigungsmittel eine in ein an dem Gehäuse des Endbeschlagstraffer ausgebildetes Schraubloch einschraubbare Schraube ist. Mit dieser Ausführungsform ist der Vorteil verbunden, dass durch die Erfassung beziehungsweise Bestimmung des Drehmoments beim Anziehen der Schraube die Abfrage der Fertigmontage des Gurtstiftes in der Gurtwelle des Endbeschlagstraffers möglich ist.

Alternativ kann vorgesehen sein, dass das Befestigungsmittel ein in eine an dem Gehäuse des Endbeschlagstraffers ausgebildete Aufnahmeöffnung einschlagbarer Splint ist.

Um die Handhabung des Gurtbandendes mit daran gehaltertem Gurtstift während der Montage des Sicherheitsgurtsystems zu erleichtern, ist nach einem Ausführungsbeispiel der Erfindung vorgesehen, dass zur Sicherung des Gurtbandes auf dem Gurtstift der Gurtstift mit in einem der Breite des Gurtbandes entsprechenden Abstand angeordneten Flanschen versehen ist.

Soweit bei der Montage eines einen Endbeschlagstraffer aufweisenden Sicherheitsgurtsystem in einem Kraftfahrzeug jeweils das Ende des Gurtbandes mit dem daran gehalterten Gurtstift von den Monteuren gehandhabt werden muss und dabei das Risiko besteht, dass die Verbindung von Gurtbandende und Gurtstift aufgehoben wird und sich der Gurtstift von dem Gurtbandende löst, ist nach einem Aspekt der Erfindung vorgesehen, dass der Gurtstift wenigstens einen in seiner Axialrichtung verlaufenden, über den Umfang des Gurtstiftes vorspringenden und entgegen seiner Einschubrichtung in die Gurtwelle offenen Widerhaken aufweist. Im Einzelnen kann vorgesehen sein, dass eine Mehrzahl von über den Umfang wie auch die Länge des Gurtstiftes verteilt angeordneten Widerhaken vorgesehen ist, wobei nach einer Ausführungsform der Erfindung zusätzlich vorgesehen sein kann, dass der Gurtstift an seinem seiner Einschubseite gegenüberliegenden äußeren Ende einen die Lage des Gurtbandes auf dem Gurtstift begrenzenden Flansch aufweist.

In der Zeichnung sind Ausführungsbeispiele der Erfindung wiedergegeben, welche nachstehend beschrieben sind. Es zeigen:
- Fig. 1: einen Endbeschlagstraffer in einer Gesamtdarstellung,
- Fig. 2: den Gurtaufrollerteil des Endbeschlagstraffers in einer geschnittenen Vorderansicht während des Einführens des Gurtstiftes in die Gurtwelle,
- Fig. 3: den Gurtaufrollerteil bei vollständig eingestecktem Gurtstift in einer Vorderansicht,
- Fig. 4: den Gegenstand der Figur 3 in einer geschnittenen Stirnansicht,
- Fig. 5: den Endbeschlagstraffer mit in die Gurtwelle eingestecktem Gurtstift im Zustand der Endmontage in einer Vorderansicht gemäß Figur 3,
- Fig. 6: den Gegenstand der Figur 5 in einer geschnittenen Stirnansicht,
- Fig. 7: eine andere Ausführungsform des Endbeschlagstraffers gemäß Figuren 2 bis 6 in einer Figur 1 entsprechenden Darstellung,
- Fig. 8: den Gegenstand der Figur 7 in einer geschnittenen Draufsicht,
- Fig. 9: den Endbeschlagstraffer in einer Ausführungsform gemäß Figur 1 ohne Antriebsteil,
- Fig. 10: das Gehäuse des Endbeschlagstraffers in einer Ansicht während der Montage des Gurtstiftes,
- Fig. 11: den Gegenstand der Figur 9 bei fertig montiertem Gurtstift,
- Fig. 12: den Gegenstand der Figur 9 in einer anderen Perspektive,
- Fig. 13: einen Gurtstift mit Haltesicherung für das Gurtband in einer vergrößerten Einzeldarstellung.

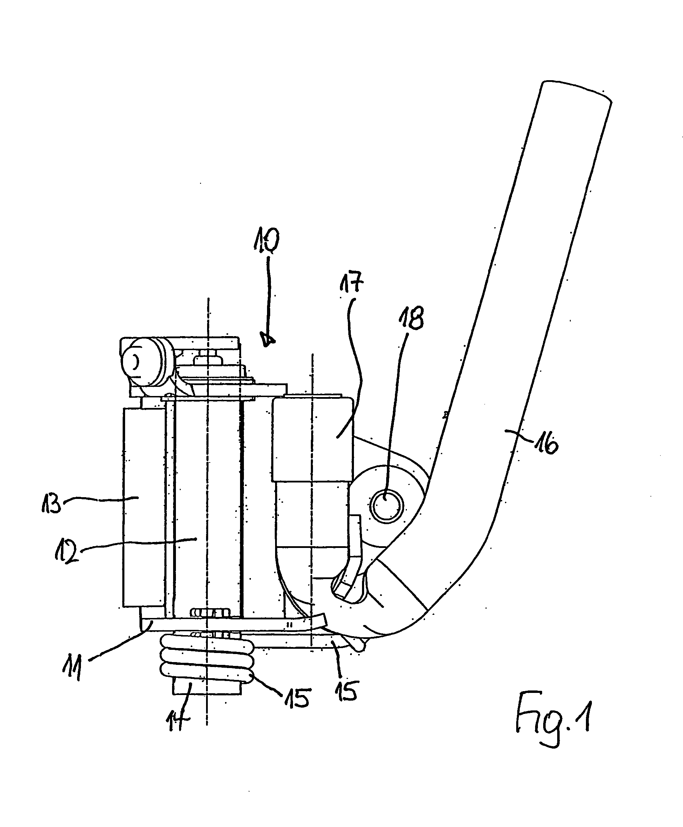

Der Aufbau des in Figur 1 dargestellten Endbeschlagstraffers entspricht in seinen konstruktiven Einzelheiten dem Aufbau des in der gattungsbildenden Druckschrift DE 103 13 551 B3 beschriebenen Gurtaufroller, so dass auf die Offenbarung dieser Druckschrift ergänzend Bezug genommen wird, soweit nicht die Merkmale des Endbeschlagstraffers als Gegenstand der vorliegenden Erfindung in den nachfolgenden Figuren dargestellt sind.

Der aus Figur 1 ersichtliche Endbeschlagstraffer 10 umfasst ein U-förmiges Gehäuse 11 mit seitlichen Schenkeln, in denen eine Gurtwelle 12 gelagert ist. An der Gurtwelle 12 ist ein Gurtband 13 in der sich aus den weiteren Figuren ergebende Form festgelegt. Die Gurtwelle 12 überragt das Gehäuse 11 an einer Seite mit einem Wellenfortsatz 14, auf welchem ein Antriebsseil 15 aufgewickelt ist, welches von dem Wellenfortsatz 14 weg in ein Antriebsrohr 16 geführt ist, das an einen Gasgenerator 17 angeschlossen ist. Wie nicht weiter dargestellt, ist in dem Antriebsrohr 16 ein Kolben angeordnet, an den das Antriebsseil 15 angeschlossen ist, so dass bei der durch die Auslösung des Gasgenerators 17 erzeugten Längsbewegung des Kolbens in dem Antriebsrohr 16 das Antriebsseil 15 von dem Wellenfortsatz 14 abgewickelt und somit die Gurtwelle 12 in Drehung versetzt wird. Aus Gründen der Platzersparnis ist das Antriebsrohr 16 relativ zum Gehäuse 11 abgebogen, wobei im Bereich der Biegestelle in dem Gehäuse 11 eine Befestigungsöffnung 18 für die Befestigung des Endbeschlagstraffers 10 an einem fahrzeugfesten Teil ausgebildet ist.

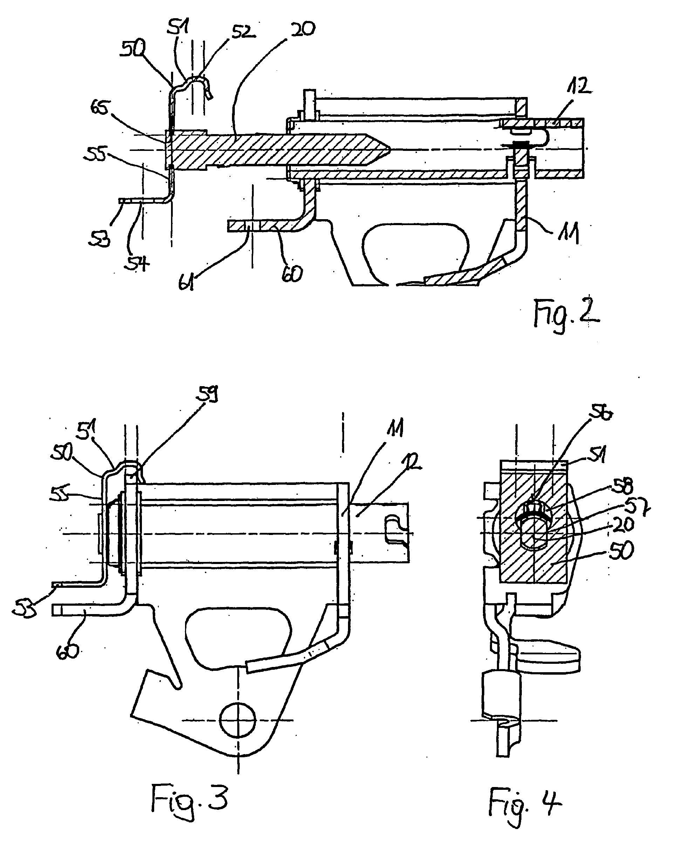

Wie sich aus Figuren 2 bis 4 ergibt, wird zur Montage des Endes des in diesen Figuren nicht dargestellten Gurtbandes an der Gurtwelle 12 ein Gurtstift 20 in die bereits im Gehäuse 11 gelagerte Gurtwelle 12 von einer Seite her eingeschoben, wobei der zugeordnete Gehäuseschenkel des Gehäuses 11 einen nicht dargestellten Schlitz aufweist, durch den das Gurtband hindurchführbar ist, so dass es bei fertig montiertem Gurtstift 20 zwischen den Schenkeln des U-förmigen Gehäuses zu liegen kommt. An seinem dem Einsteckende gegenüberliegenden äußeren Ende ist an dem Gurtstift 20 ein Sicherungsblech 50 fixiert, welches Z-förmig mit einem oberen Z-Schenkel 51, einem unteren Z-Schenkel 53 und einem dazwischen liegenden Mittelschenkel 55 ausgebildet ist. In dem Mittelschenkel 55 ist eine im Einzelnen noch zu erläuternde Aufnahmeöffnung 56 für die Fixierung des Gurtstiftes 20 an dem Sicherungsblech 50 ausgebildet. Ferner weist der untere Z-Schenkel 53 eine Befestigungsöffnung 54 zum Hindurchstecken eines Befestigungsmittels auf, wobei der unter Z-Schenkel 53 parallel zu einem Befestigungsschenkel 60 des Gehäuses 11 ausgerichtet ist, in welchem seinerseits eine Befestigungsöffnung 61 zur Aufnahme eines Befestigungsmittels zur Befestigung des Sicherungsbleches 50 an dem Gehäuse 11 ausgebildet ist. Der obere Z-Schenkel 51 ist derartig abgekröpft, dass er den oberen Rand des zugeordneten Gehäuseschenkels des Gehäuses 11 übergreift, wobei in diesem Bereich zwei Durchbrüche 52 angeordnet sind, die bei eingeschobenem Gurtstift mit zwei zugeordneten, vom oberen Rand des Befestigungsschenkels des Gehäuses 10 abragenden Zapfen 59 fluchten.

Die der Fixierung des Gurtstiftes 20 dienende Aufnahmeöffnung 56 hat eine Schlüssellochform mit einem kreisförmig ausgebildeten Drehbereich 58 und einem daran anschließenden, zwei parallele Randbereiche aufweisenden Fixierbereich 57. Entsprechend ist das an dem Sicherungsblech 50 fixierte Ende des Gurtstiftes 20 mit zwei abgeflachten Seitenflächen derart ausgebildet, dass bei in dem Fixierbereich 57 liegendem Gurtstift 20 eine undrehbare Verbindung zwischen dem Gurtstift 20 und dem Sicherungsblech 50 gegeben ist. Die zwischen den abgeflachten Flächen liegenden Bereiche des Gurtstiftes 20 sind mit einer entsprechenden Rundung ausgeführt, so dass bei in dem Drehbereich 58 liegenden Gurtstift 20 sich der Gurtstift 20 in dem Sicherungsblech 50 drehen kann. Zur Fixierung weist der Gurtstift 20 eine Nut 65 auf, in die die Randbereiche der Aufnahmeöffnung 56 des Sicherungsbleches 50 eingreifen, so dass insoweit eine formschlüssige Fixierung und axiale Sicherung zwischen Gurtstift und Sicherungsblech 50 gegeben ist.

Wie sich aus den Figuren 2 bis 4 ergibt, ist das Sicherungsblech 50 an dem Ende des Gurtstiftes 20 für dessen Montage in der Gurtwelle 12 derart fixiert, dass das Ende des Gurtstiftes 20 in dem Fixierbereich 57 der Aufnahmeöffnung 56 des Sicherungsbleches 50 liegt, so dass eine undrehbare Verbindung zwischen Sicherungsblech 50 und Gurtstift 20 besteht. In dieser Fixierstellung wird der Gurtstift 20 mit dem daran fixierten Sicherungsblech 50 in die Gurtwelle 12 eingeschoben, bis der obere Z-Schenkel 51 den zugeordneten oberen Rand des Gehäuseschenkels des Gehäuses 11 übergriffen hat. In dieser Stellung befindet sich der untere Z-Schenkel 53 noch im Abstand zu dem Befestigungsschenkel 60 des Gehäuses 11.

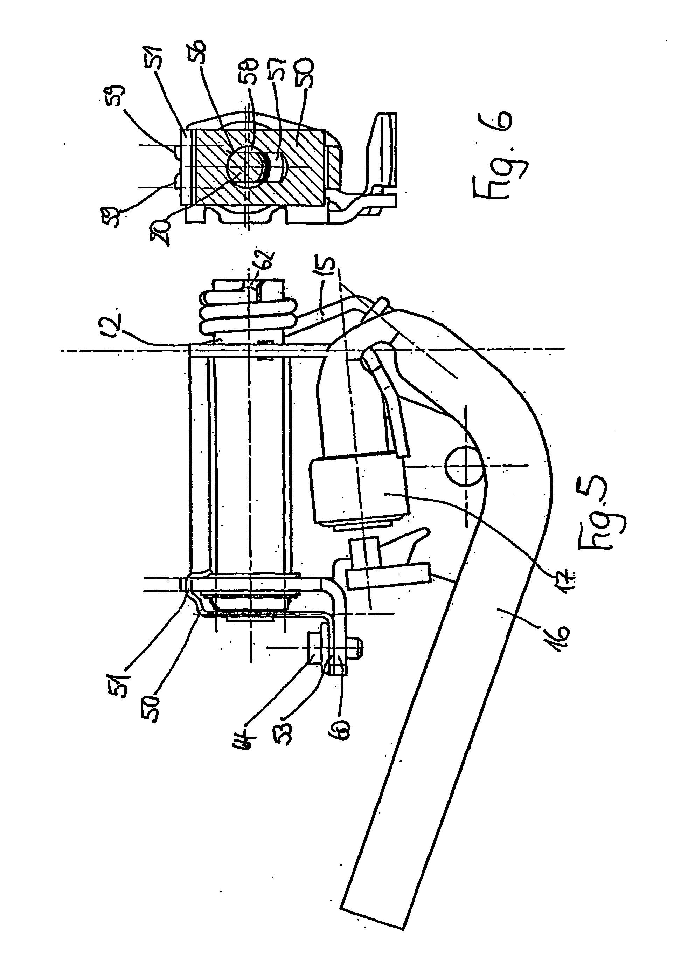

Wie sich aus einem Vergleich der Figuren 3 und 5 ergibt, wird die Endmontage dadurch herbeigeführt, dass nunmehr das Sicherungsblech 50 relativ zu dem mit seinem anderen Ende in der Gurtwelle 12 festgelegten Gurtstift 20 verschoben wird, so dass der untere Z-Schenkel 53 in Anlage an dem Befestigungsschenkel 60 des Gehäuses 11 gelangt. Gleichzeitig greifen die in dem oberen Z-Schenkel 51 ausgebildeten Durchbrüche 52 über die Zapfen 59 des Gehäuses, und schließlich rutscht das Ende des Gurtstiftes 20 von dem Fixierbereich 57 der Aufnahmeöffnung 56 in deren Drehbereich 58. Anschließend erfolgt eine Befestigung des Sicherungsbleches 50 an dem Befestigungsschenkel 60 des Gehäuses 11, indem eine Befestigungsschraube 64 durch die Befestigungsöffnung 54 des Sicherungsbleches 50 und die Befestigungsöffnung 61 des Befestigungsschenkels 60 hindurchgeschraubt wird. Gleichzeitig sorgen die die an dem oberen Rand des Gehäuseschenkels des Gehäuses 11 formschlüssig von dem Z-Schenkel 51 mit Durchbrüchen 52 übergriffenen Zapfen 59 dafür, dass in dem Endmontagezustand ein Aufbiegen des geschlitzten Gehäuseschenkels verhindert ist. Da der Gurtstift mit seinem Ende im Drehbereich 58 der Aufnahmeöffnung 56 liegt, kann sich nunmehr der Gurtstift 20 gemeinsam mit der Gurtwelle 12 drehen.

Wie nicht dargestellt, kann das Sicherungsblech 50 auch ohne eine Verbindung zum Gurtstift lediglich zur Sicherung des Befestigungsschenkels 60 des Gehäuses 11 ausgebildet sein, wobei das Sicherungsblech 50 in der beschriebenen Weise über den Eingriff seiner in dem oberen Z-Schenkel 51 ausgebildeten Durchbrüche 52 über die Zapfen 59 des Gehäuses greift. Die Festlegung des Gurtstiftes erfolgt dann in anderer Weise über ein zusätzliches Bauteil.

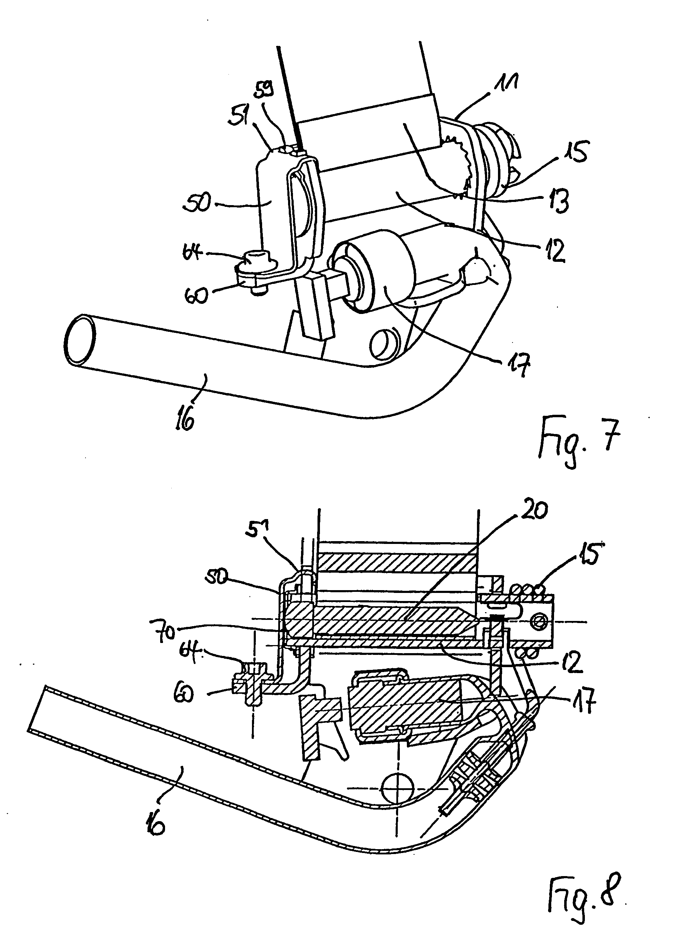

Soweit ein wesentlicher Gesichtspunkt für das vorstehend beschriebene Ausführungsbeispiel darin besteht, dass der Halter in Form des Sicherungsbleches 50 die durch den Durchführungsschlitz getrennten Bereiche des Gehäuseschenkels gegeneinander festlegt, ist es nicht unbedingt erforderlich, bei der Montage des Gurtaufrollers den Gurtstift 20 an dem Sicherungsblech 50 vorzumontieren. Es kann vielmehr auch vorgesehen sein, den Gurtstift 20 mit dem daran gehalterten Gurtband in die Gurtwelle 12 einzuschieben und anschließend das Sicherungsblech 50 an dem Gehäuse 11 festzulegen. In diesem Fall ist der Gurtstift 20 an seinem einen, dem Sicherungsblech 50 zugewandten Ende mit einer balligen Gestaltung versehen, die bei montiertem Sicherungsblech 50 gegen das Sicherungsblech anliegt, so dass der Gurtstift 20 in der Gurtwelle 12 durch das Sicherungsblech 50 axial gesichert und festgelegt ist. Eine derartige Ausführungsform der Erfindung ist in den Figuren 7 und 8 dargestellt, welches sich von dem ausführlich beschriebenen Ausführungsbeispiel gemäß Figuren 2 bis 6 nur dadurch unterscheidet, dass keine unmittelbare Verbindung zwischen dem Gurtstift 20 und dem Sicherungsblech 50 vorgesehen ist, vielmehr der Gurtstift 20 an seinem dem Sicherungsblech 50 zugewandten Ende mit einer balligen Gestaltung 70 versehen ist. Dieses ballige Ende 70 des Gurtstiftes 20 liegt bei montiertem Sicherungsblech 50 gegen das Sicherungsblech 50 an, so dass hierdurch das Sicherungsblech 50 den Gurtstift 20 in der Gurtwelle 12 unverrückbar festlegt.

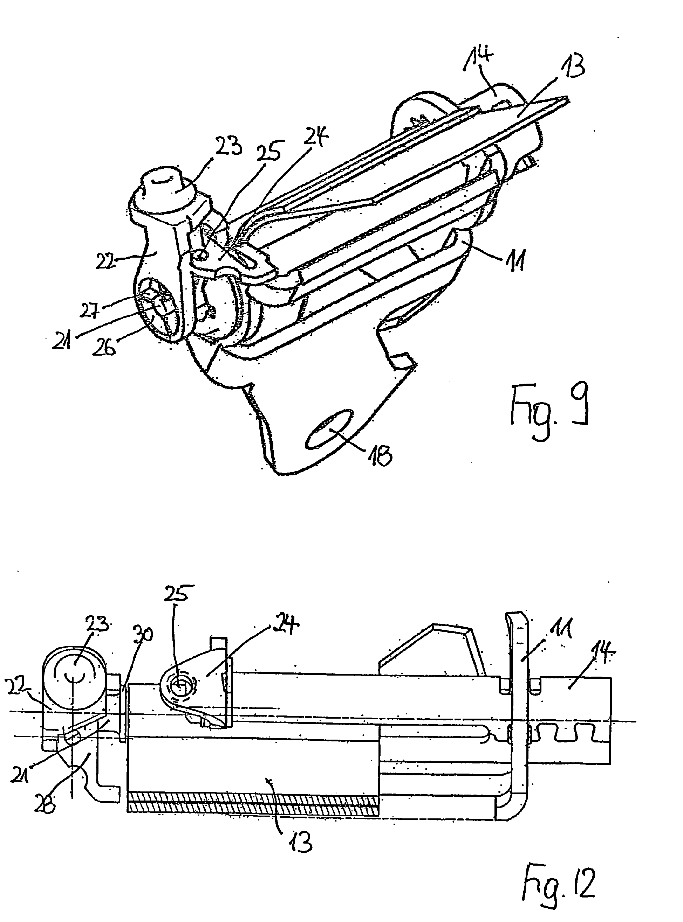

In den Figuren 9 bis 13 ist ein weiteres Ausführungsbeispiel der Erfindung wiedergegeben. Wie sich dazu aus Figur 9 näher ergibt, steht der in seiner Gesamtheit in Figur 9 nicht sichtbare, weil in die Gurtwelle 12 eingeschobene Gurtstift mit einem Ansatz 21 über den Gehäuseschenkel des Gehäuses 11 hinaus und ist mit einem radial von dem Ansatz 21 abstehenden Halter 22 verbunden. Diese Verbindung ist derart ausgestaltet, dass der Halter 22 mit einer in ihm ausgebildeten Öffnung 26 den Ansatz 21 des Gurtstiftes mit Abstand umgreift, wobei über sternförmig angeordnete radiale Sollbruchrippen 27 eine zunächst feste Verbindung zwischen dem Ansatz 21 und dem Halter 22 hergestellt ist. An dem Halter 22 ist eine Schraube 23 vormontiert, die in der Endstellung des Gurtstiftes 20 vor einem an einer Gehäuselasche 24 ausgebildeten Schraubloch 25 zu liegen kommt, so dass die Schraube 23 in das Schraubloch 25 eingeschraubt werden kann und damit der Gurtstift über den mit dem Gehäuse 11 verschraubten Halter 22 gesichert ist. Bei Auslösung des Strafferantriebs des Endbeschlagstraffers 10 und der damit verbundenen Drehung der Gurtwelle 12 brechen die Sollbruchlippen 27, so dass sich der Gurtstift 20 gemeinsam mit der Gurtwelle 12 drehen kann.

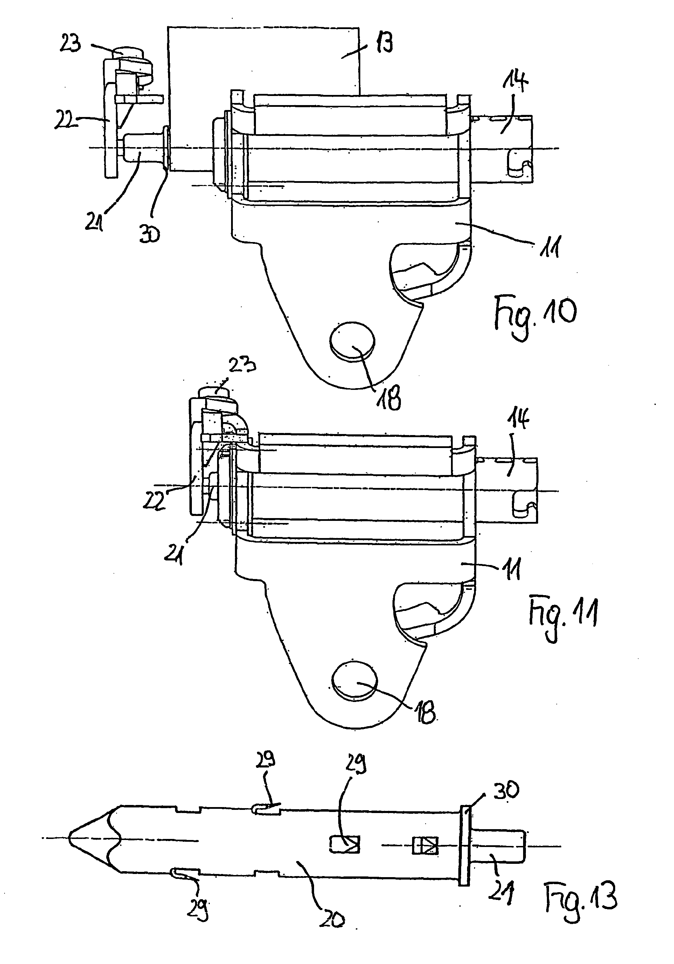

In Figur 10 ist eine Ansicht während der Montage des Gurtstiftes dargestellt, wobei sich ergänzend aus dieser Figur ergibt, dass der Gurtstift an seinem seiner Einschubseite gegenüberliegenden äußeren Ende einen die Lage des Gurtbandes 13 auf dem Gurtstift begrenzenden Flansch 30 aufweist. Aus Figur 11 ist dementsprechend der fertig montierte Zustand des Endbeschlagstraffers ersichtlich.

Aus Figur 12 ist die an dem Gehäuse 11 des Endbeschlagstraffers 10 befindliche Gehäuselasche 24 ersichtlich, in welcher das Schraubloch 25 zur Aufnahme der an dem Halter 22 vormontierten Schraube 23 angebracht ist. Ferner ist aus Figur 12 der an dem Gurtstift 20 befindliche Sicherungsbügel 28 ersichtlich, der nach der Montage des Gurtstiftes 20 in der Gurtwelle 12 den Durchführungsschlitz in dem zugeordneten Gehäuseschenkel abdeckt.

Wie sich aus Figur 13 ergibt, können an dem Gurtstift 20 zusätzlich zu dem äußeren Flansch 30 an dem Gurtstift 20 über den Umfang wie auch die Länge des Gurtstiftes 20 verteilt mehrere Widerhaken 29 ausgebildet sein, die sich in Axialrichtung des Gurtstiftes 20 erstrecken, über den Umfang des Gurtstiftes 20 vorspringen und entgegen seiner Einschubrichtung in die Gurtwelle 12 offen ausgestaltet sind. Bei dieser Gestaltung ist der Gurtstift in eine am Ende des Gurtbandes 13 ausgebildete Gurtbandschlaufe einschiebbar, wobei der am Ende des Gurtstiftes 20 ausgebildete Flansch 30 als Begrenzung des Einschubweges dient. Der Einschubbewegung setzen die Widerhaken 29 keinen Widerstand entgegen; die Widerhaken 29 verhindern jedoch ein Herausrutschen des Gurtstiftes 20 aus der den Gurtstift 20 umschließenden Gurtbandschlaufe, weil sich in dieser Bewegungsrichtung die Widerhaken 29 an dem um den Gurtstift 20 geschlungenen Gewebe des Gurtbandes 13 verhaken.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Endbeschlagstraffer (10) für ein Sicherheitsgurtsystem in Kraftfahrzeugen mit einer in seitlichen Gehäuseschenkeln eines U-förmigen Gehäuses (11) gelagerten Gurtwelle (12), wobei das Ende des Gurtbandes (13) mittels eines in eine Ausnehmung der Gurtwelle (12) eingelegten Gurtstiftes (20) an der Gurtwelle (12) festgelegt ist, wobei die Gurtwelle (12) an einer Stirnseite eine Öffnung als Zugang zur Ausnehmung sowie einen radialen, von der Ausnehmung bis zum Außenumfang der Gurtwelle reichenden Wellenschlitz zum seitlichen Einschieben des Gurtbandendes mit Gurtstift (20) und weiterhin ein Gehäuseschenkel einen in die Lageröffnung für die Gurtwelle reichenden Durchführungsschlitz für das einzuschiebende Gurtband aufweisen, **dadurch gekennzeichnet, dass** der Gurtstift (20) an dem seiner Einschubseite gegenüberliegenden äußeren Ende in einem bei in die Gurtwelle (12) eingeschobenem Gurtstift (20) an dem Gehäuse (11) festlegbaren Halter (50, 22) fixiert ist, und dass der Gurtstift (20) bei Auslösung des Strafferantriebs und Drehung der Gurtwelle (12) gegenüber dem Halter (50, 22) frei drehbar eingerichtet ist.

2. Endbeschlagstraffer insbesondere nach Anspruch 1, **dadurch gekennzeichnet, dass** der Halter (50) an dem mit dem Durchführungsschlitz versehenen Gehäuseschenkel des Gehäuses (11) derart festgelegt ist, dass der am Gehäuse (11) befestigte Halter (50) die durch den Durchführungsschlitz getrennten Bereiche des Gehäuseschenkels gegeneinander festlegt.

3. Endbeschlagstraffer nach Anspruch 1 oder 2, **dadurch gekennzeichnet, dass** der Halter aus einem Z-förmigen Sicherungsblech (50) besteht, dessen einer Z-Schenkel (51) den mit dem Durchführungsschlitz versehenen Gehäuseschenkel des Gehäuses (11) übergreift und in dessen anderen Z-Schenkel (53) eine Befestigungsöffnung (54) zur Aufnahme des den Z-Schenkel (53) mit dem Gehäuse (11) verbindenden Befestigungsmittels angeordnet ist, wobei in dem Mittelschenkel (55) des Sicherungsbleches (50) eine Aufnahmeöffnung (56) zur Fixierung des Gurtstiftes (20) angeordnet ist.

4. Endbeschlagstraffer nach Anspruch 3, **dadurch gekennzeichnet, dass** der den Gehäuseschenkel übergreifende Z-Schenkel (51) des Sicherungsbleches (50) in dessen Befestigungslage jeweils formschlüssig mit den durch den Durchführungsschlitz getrennten Bereichen des Gehäuseschenkels verbunden ist.

5. Endbeschlagstraffer nach Anspruch 4, **dadurch gekennzeichnet, dass** in dem den Gehäuseschenkel übergreifenden Z-Schenkel (51) des Befestigungsbleches (50) zwei Durchbrüche (52) ausgebildet sind, die jeweils einen von den durch den Durchführungsschlitz getrennten Bereichen des Gehäuseschenkels abragenden Zapfen (59) übergreifen.

6. Endbeschlagstraffer nach einem der Ansprüche 3 bis 5, **dadurch gekennzeichnet, dass** der den Gehäuseschenkel übergreifende Z-Schenkel (51) des Sicherungsbleches (50) mit einem abgekröpften Ende den Gehäuseschenkel formschlüssig übergreift und dadurch axial gegen das Gehäuse (11) festgelegt ist.

7. Endbeschlagstraffer nach einem der Ansprüche 3 bis 6, **dadurch gekennzeichnet, dass** die in dem Mittelschenkel (55) des Sicherungsbleches (50) ausgebildete Aufnahmeöffnung (56) schlüssellochartig mit einem das Ende des darin eingelegten Gurtstiftes (20) frei drehbar haltenden Bereich (58) und mit einem den Gurtstift (20) undrehbar fixierenden Bereich (57) ausgebildet ist, wobei der Gurtstift (20) in der Montagestellung des Sicherungsbleches (50) in dem Fixierbereich (57) der Aufnahmeöffnung (56) liegt und während der Montage durch Relativverschiebung des Sicherungsbleches (50) gegenüber dem den Gurtstift (20) einseitig lagernden Gehäuse (11) in den Drehbereich (58) der Aufnahmeöffnung (56) wandert.

8. Endbeschlagstraffer nach einem der Ansprüche 3 bis 7, **dadurch gekennzeichnet, dass** der Gurtstift (20) an seinem in dem Sicherungsblech (50) fixierten Ende eine Nut (65) zum Eingriff des Randes der Aufnahmeöffnung (56) aufweist.

9. Endbeschlagstraffer nach Anspruche 1 mit einem in der Sicherungslage den Durchführungsschlitz im Gehäuse übergreifenden Sicherungsbügel, **dadurch gekennzeichnet, dass** der Sicherungsbügel (28) Bestandteil des Gurtstiftes (20) und an diesem vormontiert ist.

10. Endbeschlagstraffer nach Anspruch 1 oder 9, **dadurch gekennzeichnet, dass** der Gurtstift (20) mit einem Ansatz (21) in eine in dem Halter (22) ausgebildete Öffnung (26) ragt und über sternförmig über seinen Umfang verteilt angeordnete radiale Sollbruch-rippen (27) mit dem den Ansatz (21) des Gurtstiftes (20) mit Abstand umgrenzenden Rand der Öffnung (26) des Halters (22) verbunden ist.

11. Endbeschlagstraffer nach einem der Ansprüche 1 bis 10, **dadurch gekennzeichnet, dass** das Befestigungsmittel eine in ein an dem Gehäuse (11) des Endbeschlagstraffer (10) ausgebildetes Schraubloch (25) einschraubbare Schraube (23) ist.

12. Endbeschlagstraffer nach einem der Ansprüche 1 bis 10, **dadurch gekennzeichnet, dass** das Befestigungsmittel ein in eine an dem Gehäuse (11) des Endbeschlagstraffers (10) ausgebildete Aufnahmeöffnung einschlagbarer Splint ist.

13. Endbeschlagstraffer nach einem der Ansprüche 1 bis 12, **dadurch gekennzeichnet, dass** der Gurtstift (20) über Sollbruchstellen mit dem Halter (22) verbunden ist.

14. Endbeschlagstraffer nach einem der Ansprüche 1 bis 13, **dadurch gekennzeichnet, dass** zur Sicherung des Gurtbandes (13) auf dem Gurtstift (20) der Gurtstift (20) mit in einem der Breite des Gurtbandes (13) entsprechenden Abstand angeordneten Flanschen versehen ist.

15. Endbeschlagstraffer insbesondere nach einem der Ansprüche 1 bis 13, **dadurch gekennzeichnet, dass** der Gurtstift (20) wenigstens einen in seiner Axialrichtung verlaufenden, über den Umfang des Gurtstiftes (20) vorspringenden und entgegen seiner Einschubrichtung in die Gurtwelle (12) offenen Widerhaken (29) aufweist.

16. Endbeschlagstraffer nach einem der Ansprüche 1 bis 15, **dadurch gekennzeichnet, dass** eine Mehrzahl von über den Umfang wie auch die Länge des Gurtstiftes (20) verteilt angeordneten Widerhaken (29) vorgesehen ist.

17. Endbeschlagstraffer nach der Ansprüche 1 bis 16, **dadurch gekennzeichnet, dass** der Gurtstift (20) an seinem seiner Einschubseite gegenüberliegenden äußeren Ende einen die Lage des Gurtbandes (13) auf dem Gurtstift (20) begrenzenden Flansch (30) aufweist.

## Claims

1. End-fitting tensioner (10) for a seatbelt system in motor vehicles, with a belt shaft (12) which is mounted in lateral housing limbs of a U-shaped housing (11), wherein the end of the belt strap (13) is fixed to the belt shaft (12) by means of a belt pin (20) placed into a recess of the belt shaft (12), and wherein the belt shaft (12) has, on an end side, an opening as access to the recess, and a radial shaft slot, which reaches from the recess as far as the outer circumference of the belt shaft and is intended for the lateral pushing in of the belt strap end with the belt pin (20), and furthermore a housing limb has a feed-through slot which reaches into the bearing opening for the belt shaft and is intended for the belt strap which is to be pushed in, **characterized in that,** at the outer end lying opposite its insertion side, the belt pin (20) is fixed in a holder (50, 22) which can be secured to the housing (11) when the belt pin (20) is pushed into the belt shaft (12), and **in that** the belt pin (20) is designed to be freely rotatable when the tensioner drive is triggered and the belt shaft (12) rotates in relation to the holder (50, 22).

2. End-fitting tensioner, in particular according to Claim 1, **characterized in that** the holder (50) is secured in such a manner to that housing limb of the housing (11) which is provided with the feed-through slot that the holder (50), which is fastened to the housing (11), secures those regions of the housing limb which are separated by the feed-through slot in relation to each other.

3. End-fitting tensioner according to Claim 1 or 2, **characterized in that** the holder comprises a Z-shaped securing plate (50), the one Z limb (51) of which engages over that housing limb of the housing (11) which is provided with the feed-through slot, and a fastening opening (54) for receiving the fastening means connecting the Z limb (53) to the housing (11) is arranged in the other Z limb (53) of said securing plate, with a receiving opening (56) for the fixing of the belt pin (20) being arranged in the central limb (55) of the securing plate (50).

4. End-fitting tensioner according to Claim 3, **characterized in that that** Z limb (51) of the securing plate (50) which engages over the housing limb, in the fastening position thereof, is connected in each case in a form-fitting manner to those regions of the housing limb which are separated by the feed-through slot.

5. End-fitting tensioner according to Claim 4, **characterized in that** two apertures (52) are formed **in that** Z limb (51) of the fastening plate (50) which engages over the housing limb, said apertures each engaging over a stud (59) protruding from those regions of the housing limb which are separated by the feed-through slot.

6. End-fitting tensioner according to one of Claims 3 to 5, **characterized in that that** Z limb (51) of the securing plate (50) which engages over the housing limb engages over the housing limb in a form-fitting manner by means of a bent end and, as a result, is secured axially against the housing (11).

7. End-fitting tensioner according to one of Claims 3 to 6, **characterized in that** the receiving opening (56) formed in the central limb (55) of the securing plate (50) is designed in the manner of a keyhole with a region (58) keeping the end of the belt pin (20) inserted therein freely rotatable and with a region (57) fixing the belt pin (20) in a non-rotatable manner, the belt pin (20) lying in the fixing region (57) of the receiving opening (56) in the mounting position of the securing plate (50) and, during the mounting, migrating into the rotational region (58) of the receiving opening (56) because of the displacement of the securing plate (50) relative to the housing (11) which supports the belt pin (20) on one side.

8. End-fitting tensioner according to one of Claims 3 to 7, **characterized in that** the end of the belt pin (20) which is fixed in the securing plate (50) has a groove (65) for the engagement of the edge of the receiving opening (56).

9. End-fitting tensioner according to Claim 1 with a securing clip which, in the securing position, engages over the feed-through slot in the housing, **characterized in that** the securing clip (28) is part of the belt pin (20) and is preassembled thereon.

10. End-fitting tensioner according to Claim 1 or 9, **characterized in that** the belt pin (20) projects with an extension (21) into an opening (26) formed in the holder (22) and is connected via radial predetermined breaking ribs (27) distributed in a star-shaped manner over its circumference to the edge of the opening (26) of the holder (22), the edge bounding the extension (21) of the belt pin (20) at a distance.

11. End-fitting tensioner according to one of Claims 1 to 10, **characterized in that** the fastening means is a screw (23) which can be screwed into a screw hole (25) formed on the housing (11) of the end-fitting tensioner (10).

12. End-fitting tensioner according to one of Claims 1 to 10, **characterized in that** the fastening means is a split-pin which can be driven into a receiving opening formed on the housing (11) of the end-fitting tensioner (10).

13. End-fitting tensioner according to one of Claims 1 to 12, **characterized in that** the belt pin (20) is connected to the holder (22) via predetermined breaking points.

14. End-fitting tensioner according to one of Claims 1 to 13, **characterized in that**, in order to secure the belt strap (13) on the belt pin (20), the belt pin (20) is provided with flanges arranged at a distance corresponding to the width of the belt strap (13).

15. End-fitting tensioner, in particular according to one of Claims 1 to 13, **characterized in that** the belt pin (20) has at least one barb (29) which runs in its axial direction, projects over the circumference of the belt pin (20) and is open counter to its direction of insertion into the belt shaft (12).

16. End-fitting tensioner according to one of Claims 1 to 15**, characterized in that** a plurality of barbs (29) distributed over the circumference and over the length of the belt pin (20) is provided.

17. End-fitting tensioner according to Claims 1 to 16, **characterized in that** the belt pin (20), at its outer end lying opposite its insertion side, has a flange (30) which delimits the position of the belt strap (13) on the belt pin (20).

## Revendications

1. Tendeur à ferrure de fin de course (10) pour un système de ceinturé de sécurité dans des véhicules automobiles, comportant un arbre d'enroulement (12) monté dans des branches latérales d'un boîtier (11) en forme de U, l'extrémité de la sangle (13) étant fixée sur l'arbre d'enroulement (12) au moyen d'une broche pour sangle (20) insérée dans un évidement de l'arbre d'enroulement (12), ledit arbre d'enroulement (12) comportant sur une face frontale une ouverture formant un accès vers l'évidement, ainsi qu'une fente radiale, qui s'étend depuis l'évidement jusqu'à la périphérie extérieure de l'arbre d'enroulement et dans laquelle s'introduit l'extrémité de la sangle avec la broche pour sangle (20), et, par ailleurs, une branche du boîtier comportant une fente de passage pour la sangle à introduire, laquelle fente s'étend dans l'ouverture de montage pour l'arbre d'enroulement, **caractérisé en ce que** la broche pour sangle (20), sur l'extrémité extérieure opposée à son côté d'introduction, est fixée dans un support (50, 22), pouvant être fixé contre le boîtier (11) lorsque la broche pour sangle (20) est insérée dans l'arbre d'enroulement (12), et **en ce que** la broche pour sangle (20) est conçue pour pouvoir tourner librement par rapport au support (50, 22) en cas de déclenchement de l'entraînement du tendeur et en cas de rotation de l'arbre d'enroulement (12).

2. Tendeur à ferrure de fin de course en particulier selon la revendication 1, **caractérisé en ce que** le support (50) est fixé contre la branche du boîtier (11), munie de la fente de passage, de telle sorte que le support (50), fixé contre le boîtier (11), immobilise l'une par rapport à l'autre les zones de la branche séparées par la fente de passage.

3. Tendeur à ferrure de fin de course selon la revendication 1 ou 2, **caractérisé en ce que** le support est formé par une plaque d'immobilisation (50) en forme de Z, dont une branche (51) du Z s'engage au-dessus de la branche du boîtier (11) munie de la fente de passage, et dont l'autre branche (53) du Z comporte un orifice de fixation (54) destiné à recevoir le moyen de fixation reliant la branche (53) du Z avec le boîtier (11), sachant que dans la branche médiane (55) de la plaque d'immobilisation (50) est réalisé un orifice de réception (56) pour la fixation de la broche pour sangle (20).

4. Tendeur à ferrure de fin de course selon la revendication 3, **caractérisé en ce que** la branche (51) de la plaque d'immobilisation (50) en Z, s'engageant au-dessus de la branche du boîtier, est reliée, lorsque ladite plaque est en position de fixation, par conjugaison de forme avec les zones séparées par la fente de passage dans la branche du boîtier concernée.

5. Tendeur à ferrure de fin de course selon la revendication 4, **caractérisé en ce que** dans la branche (51) de la plaque d'immobilisation (50) en Z, s'engageant au-dessus de la branche du boîtier, sont réalisés deux trous débouchants (52), qui s'engagent chacun au-dessus d'un téton (59) en saillie sur les zones séparées par la fente de passage dans la branche du boîtier.

6. Tendeur à ferrure de fin de course selon l'une quelconque des revendications 3 à 5, **caractérisé en ce que** la branche (51) de la plaque d'immobilisation (50) en Z, s'engageant au-dessus de la branche du boîtier, enserre avec une extrémité coudée la branche du boîtier par le dessus et par conjugaison de forme et, de ce fait, est immobilisée axialement contre le boîtier (11).

7. Tendeur à ferrure de fin de course selon l'une quelconque des revendications 3 à 6, **caractérisé en ce que** l'orifice de réception (56), réalisé dans la branche médiane (55) de la plaque d'immobilisation (50), est réalisé en forme de trou de serrure avec une zone (58), qui maintient de manière librement rotative l'extrémité de la broche pour sangle (20) insérée dans ledit orifice de réception, et avec une zone (57), qui fixe de manière immobile en rotation la broche pour sangle (20), sachant que la broche pour sangle (20), dans la position de montage de la plaque d'immobilisation (50), est située dans la zone d'immobilisation (57) de l'orifice de réception (56) et, pendant le montage, se déplace dans la zone de rotation (58) de l'orifice de réception (56) sous l'effet du mouvement relatif de la plaque d'immobilisation (50) par rapport au boîtier (11) recevant un côté de la broche pour sangle (20).

8. Tendeur à ferrure de fin de course selon l'une quelconque des revendications 3 à 7, **caractérisé en ce que** la broche pour sangle (20), au niveau de son extrémité fixée dans la plaque d'immobilisation (50), comporte une rainure (65) dans laquelle s'engage le bord de l'orifice de réception (56).

9. Tendeur à ferrure de fin de course selon la revendication 1, comportant un étrier de sécurité qui, dans la position d'immobilisation, s'engage au-dessus de la fente de passage dans le boîtier, **caractérisé en ce que** l'étrier de sécurité (28) est une partie intégrante de la broche pour sangle (20) et est pré-assemblé à celle-ci.

10. Tendeur à ferrure de fin de course selon la revendication 1 ou 9, **caractérisé en ce que** la broche pour sangle (20) s'engage avec une saillie (21) dans un orifice (26), ménagé dans le support (22), et, par l'intermédiaire de nervures radiales (27) destinées à la rupture, réparties en étoile sur sa périphérie, est reliée au bord de l'orifice (26), entourant la saillie (21) de la broche pour sangle (20), dans le support (22).

11. Tendeur à ferrure de fin de course selon l'une quelconque des revendications 1 à 10, **caractérisé en ce que** le moyen de fixation est une vis (23) pouvant être vissée dans un trou taraudé (25), réalisé dans le boîtier (11) du tendeur (10).

12. Tendeur à ferrure de fin de course selon l'une quelconque des revendications 1 à 10, **caractérisé en ce que** le moyen de fixation est une goupille de retenue pouvant être enfoncée dans l'orifice de réception ménagé dans le boîtier (11) du tendeur (10).

13. Tendeur à ferrure de fin de course selon l'une quelconque des revendications 1 à 12, **caractérisé en ce que** la broche pour sangle (20) est reliée au support (22) par l'intermédiaire de points destinés à la rupture.

14. Tendeur à ferrure de fin de course selon l'une quelconque des revendications 1 à 13, **caractérisé en ce que**, pour immobiliser la sangle (13) sur la broche pour sangle (20), la broche pour sangle (20) est munie de collerettes disposées l'une de l'autre à une distance correspondant à la largeur de la sangle (13).

15. Tendeur à ferrure de fin de course en particulier selon l'une quelconque des revendications 1 à 13, **caractérisé en ce que** la broche pour sangle (20) comporte au moins un crochet (29) orienté dans la direction axiale de la broche pour sangle (20), en saillie sur la périphérie de celle-ci et ouvert dans le sens opposé à la direction d'introduction de ladite broche dans l'arbre d'enroulement (12).

16. Tendeur à ferrure de fin de course selon l'une quelconque des revendications 1 à 15, **caractérisé en ce qu'**il est prévu une pluralité de crochets (29) répartis sur le pourtour et la longueur de la broche pour sangle (20).

17. Tendeur à ferrure de fin de course selon l'une quelconque des revendications 1 à 16, **caractérisé en ce que** la broche pour sangle (20), au niveau de son extrémité extérieure opposée à son côté d'introduction, comporte une collerette (30) délimitant la position de la sangle (13) sur la broche pour sangle (20).
